# EUROPEAN PATENT APPLICATION

(11) **EP 4 564 159 A1**
(43) Date of publication of application: **04.06.2025**
(21) Application number: 24216431.7
(22) Date of filing: 29.11.2024
(51) Int. Cl.: G06F 8/65, G06F 8/71, G06F 21/10

(54) **TECHNIQUES FOR UPDATING FIRMWARE ON NETWORK MANAGEMENT CARDS**

(30) Priority: 30.11.2023 US 202363604574 P; 27.11.2024 US 202418962349
(71) Applicant: Schneider Electric IT Corporation, Foxboro, MA 02035 (US)
(72) Inventor: BONENFANT, Michael Albert, ANDOVER, 01810 (US); GILLESPIE, Simon Hugh, GALWAY, H91 NN99 (IE); MURPHY, Brian Joseph, GALWAY, H91 NN99 (IE)
(74) Representative: Plasseraud IP

(57) **Abstract**

Techniques are described for conducting a firmware update on an NMC by: (a) sending a request for a license to install the firmware update on the NMC from a computing device to a remote licensing server, the request including an identifier of the NMC; (b) receiving the license by the computing device from the licensing server; (c) in response to a user request to install the firmware update on the NMC, verifying, by the computing device, that the license is associated with the identifier of the NMC; and (d) in response to verifying that the license is associated with the identifier of the NMC, sending the firmware update from the computing device to the NMC.

## Description

### BACKGROUND

Network Management Cards (NMCs) are network devices that manage various features of and devices on a computer network. For example, an NMC may allow a Universal Power Supply (UPS) unit to be managed.

An NMC may include firmware to control its operation. In some NMCs, this firmware may be upgradable, allowing a user to install a firmware update at any point that new firmware becomes available.

### SUMMARY

In an embodiment, a computer program product is described. The computer program product includes a non-transitory computer-readable storage medium storing instructions, which when performed by processing circuitry of a computing system, cause the computing system to conduct a firmware update on an external NMC by (a) sending a request for a license to install the firmware update on the NMC from a request device of the computing system to a remote licensing server, the request including an identifier of the NMC; (b) receiving the license by the request device from the licensing server; (c) in response to a user request to install the firmware update on the NMC, verifying, by an installation device of the computing system, that the license is associated with the identifier of the NMC; and (d) in response to verifying that the license is associated with the identifier of the NMC, sending the firmware update from the installation device to the NMC.

In some embodiments, the installation device is the request device and the NMC is connected to the installation device via a non-public local network. In some of these embodiments, the instructions, when executed by the processing circuitry, further cause the request device to: (e) request the identifier from the NMC via the non-public local network and (f) in response, receive the identifier from the NMC via the non-public local network.

In some embodiments, (i) the installation device connects to the NMC via a non-public local network; (ii) the installation device does not connect to any public network; (iii) the request device is separate from the installation device; (iv) the request device connects to a public network via which the licensing server is reachable; and (v) the request device does not connect to the non-public local network.

In some embodiments, sending the firmware update from the installation device to the NMC includes: (i) decrypting an encrypted version of the firmware update to yield a decrypted version of the firmware update and (ii) sending the decrypted version of the firmware update to the NMC.

In some embodiments, the instructions, when executed by the processing circuitry, further cause: (e) the request device to send a query to a remote versioning server, the query including a globally unique identifier associated with the NMC; (f) the request device to receive, in response to the query, a list of all valid firmware versions for the NMC; and (g) the request device to determine which firmware update to conduct with reference to the list of all valid firmware versions for the NMC.

In an embodiment, a method of conducting a firmware update on an NMC is described. The method includes (a) sending a request for a license to install the firmware update on the NMC from a request device to a remote licensing server, the request including an identifier of the NMC; (b) receiving the license by the request device from the licensing server; (c) in response to a user request to install the firmware update on the NMC, verifying, by an installation device, that the license is associated with the identifier of the NMC; and (d) in response to verifying that the license is associated with the identifier of the NMC, sending the firmware update from the installation device to the NMC.

In some embodiments, the installation device is the request device and the NMC is connected to the installation device via a non-public local network. In some of these embodiments, the method further includes the request device: (e) requesting the identifier from the NMC via the non-public local network and (f) in response, receiving the identifier from the NMC via the non-public local network. In some of these embodiments, the method further includes: (g) prior to requesting the identifier, disconnecting the request device from all public networks and connecting the request device to the non-public local network; (h) subsequent to receiving the identifier and prior to sending the request, disconnecting the request device from the non-public local network and connecting the request device to a public network via which the licensing server is reachable; and (i) subsequent to receiving the license and prior to receiving the user request, disconnecting the request device from all public networks and connecting the request device to the non-public local network.

In some embodiments, (i) the installation device connects to the NMC via a non-public local network; (ii) the installation device does not connect to any public network; (iii) the request device is separate from the installation device; (iv) the request device connects to a public network via which the licensing server is reachable; and (v) the request device does not connect to the non-public local network. In some of these embodiments, the method further includes: (e) the installation device requesting the identifier from the NMC via the non-public local network; (f) in response, the installation device receiving the identifier from the NMC via the non-public local network; (g) in response, a user copying the identifier from the installation device to the request device; and (h) subsequent to the request device receiving the license, the user copying the license from the request device to the installation device. In one of these embodiments, the user copying the identifier and the user copying the license are both performed by manually reading and typing. In another of these embodiments, (I) the user copying the identifier includes the user copying the identifier to a removable storage device and then copying the identifier from the removable storage device to the request device and (II) the user copying the license includes the user copying the license to a removable storage device and then copying the license from the removable storage device to the installation device.

In some embodiments, sending the firmware update from the installation device to the NMC includes: (i) decrypting an encrypted version of the firmware update to yield a decrypted version of the firmware update and (ii) sending the decrypted version of the firmware update to the NMC.

In some embodiments, the method further includes: (e) sending a query from the request device to a remote versioning server, the query including a globally unique identifier associated with the NMC; (f) in response to the query, receiving, by the request device, a list of all valid firmware versions for the NMC; and (g) determining, by the request device, which firmware update to conduct with reference to the list of all valid firmware versions for the NMC.

In an embodiment, a system is described. The system includes (1) a request device having first network interface circuitry configured to connect to a remote licensing server; (2) an installation device having second network interface circuitry configured to connect to an external network management card (NMC); and (3) processing circuitry coupled to memory configured to conduct a firmware update on the NMC by: (a) sending, via the first network interface circuitry, a request for a license to install the firmware update on the NMC to the remote licensing server, the request including an identifier of the NMC; (b) receiving, via the first network interface circuitry, the license from the licensing server; (c) in response to a user request to install the firmware update on the NMC, verifying, by the installation device, that the license is associated with the identifier of the NMC; and (d) in response to verifying that the license is associated with the identifier of the NMC, sending the firmware update to the NMC via the second network interface circuitry.

In some embodiments, the installation device is the request device and the NMC is connected to the installation device via a non-public local network. In some of these embodiments, the processing circuitry coupled to memory is further configured to cause the request device to: (e) request the identifier from the NMC via the non-public local network and (f) in response, receive the identifier from the NMC via the non-public local network.

In some embodiments, (i) the installation device connects to the NMC via a non-public local network; (ii) the installation device does not connect to any public network; (iii) the request device is separate from the installation device; (iv) the request device connects to a public network via which the licensing server is reachable; and (v) the request device does not connect to the non-public local network.

In some embodiments, sending the firmware update from the installation device to the NMC includes: (i) decrypting an encrypted version of the firmware update to yield a decrypted version of the firmware update and (ii) sending the decrypted version of the firmware update to the NMC.

In some embodiments, the processing circuitry coupled to memory is further configured to cause: (e) the request device to send a query to a remote versioning server, the query including a globally unique identifier associated with the NMC; (f) the request device to receive, in response to the query, a list of all valid firmware versions for the NMC; and (g) the request device to determine which firmware update to conduct with reference to the list of all valid firmware versions for the NMC.

In an embodiment, a computer program product is described. The computer program product includes a non-transitory computer-readable storage medium storing instructions, which when performed by processing circuitry of a computing device, cause the computing device to conduct a firmware update on an external network management card (NMC) by: (a) sending a request for a license to install the firmware update on the NMC from the computing device to a remote licensing server, the request including an identifier of the NMC; (b) receiving the license by the computing device from the licensing server; (c) in response to a user request to install the firmware update on the NMC, verifying, by the computing device, that the license is associated with the identifier of the NMC; and (d) in response to verifying that the license is associated with the identifier of the NMC, sending the firmware update from the computing device to the NMC.

In some embodiments, the NMC is connected to the computing device via a non-public local network. In some of these embodiments, the instructions, when executed by the processing circuitry, further cause the computing device to: (e) request the identifier from the NMC via the non-public local network and (f) in response, receive the identifier from the NMC via the non-public local network.

In some embodiments, sending the firmware update from the computing device to the NMC includes: (i) decrypting an encrypted version of the firmware update to yield a decrypted version of the firmware update and (ii) sending the decrypted version of the firmware update to the NMC.

In some embodiments, the instructions, when executed by the processing circuitry, further cause the computing device to: (e) send a query to a remote versioning server, the query including a globally unique identifier associated with the NMC; (f) receive, in response to the query, a list of all valid firmware versions for the NMC; and (g) determine which firmware update to conduct with reference to the list of all valid firmware versions for the NMC.

In an embodiment, a method of conducting a firmware update on an NMC is described. The method includes (a) sending a request for a license to install the firmware update on the NMC from a computing device to a remote licensing server, the request including an identifier of the NMC; (b) receiving the license by the computing device from the licensing server; (c) in response to a user request to install the firmware update on the NMC, verifying, by the computing device, that the license is associated with the identifier of the NMC; and (d) in response to verifying that the license is associated with the identifier of the NMC, sending the firmware update from the computing device to the NMC.

In some embodiments, the NMC is connected to the computing device via a non-public local network. In some of these embodiments, the method further includes the computing device: (e) requesting the identifier from the NMC via the non-public local network and (f) in response, receiving the identifier from the NMC via the non-public local network. In some of these embodiments, the method further includes: (g) prior to requesting the identifier, disconnecting the computing device from all public networks and connecting the computing device to the non-public local network; (h) subsequent to receiving the identifier and prior to sending the request, disconnecting the computing device from the non-public local network and connecting the computing device to a public network via which the licensing server is reachable; and (i) subsequent to receiving the license and prior to receiving the user request, disconnecting the computing device from all public networks and connecting the computing device to the non-public local network.

In some embodiments, sending the firmware update from the computing device to the NMC includes: (i) decrypting an encrypted version of the firmware update to yield a decrypted version of the firmware update and (ii) sending the decrypted version of the firmware update to the NMC.

In some embodiments, the method further includes: (e) sending a query from the computing device to a remote versioning server, the query including a globally unique identifier associated with the NMC; (f) in response to the query, receiving, by the computing device, a list of all valid firmware versions for the NMC; and (g) determining, by the computing device, which firmware update to conduct with reference to the list of all valid firmware versions for the NMC.

In an embodiment, an apparatus is described. The apparatus includes (1) first network interface circuitry configured to connect to a remote licensing server; (2) second network interface circuitry configured to connect to an external network management card (NMC); and (3) processing circuitry coupled to memory configured to conduct a firmware update on the NMC by: (a) sending, via the first network interface circuitry, a request for a license to install the firmware update on the NMC to the remote licensing server, the request including an identifier of the NMC; (b) receiving, via the first network interface circuitry, the license from the licensing server; (c) in response to a user request to install the firmware update on the NMC, verifying that the license is associated with the identifier of the NMC; and (d) in response to verifying that the license is associated with the identifier of the NMC, sending the firmware update to the NMC via the second network interface circuitry.

In some embodiments, the NMC is connected to the second network interface via a non-public local network. In some of these embodiments, the processing circuitry coupled to memory is further configured to cause the apparatus device to: (e) request the identifier from the NMC via the non-public local network and (f) in response, receive the identifier from the NMC via the non-public local network.

### BRIEF DESCRIPTION OF THE DRAWINGS

Various aspects of at least one embodiment are discussed below with reference to the accompanying Figures, which are not intended to be drawn to scale. The Figures are included to provide illustration and a further understanding of the various aspects and embodiments and are incorporated in and constitute a part of this Specification but are not intended to define the limits of the disclosure. In the Figures, each identical or nearly identical component that is illustrated in various Figures is represented by a like numeral. For the purposes of clarity, some components may not be labeled in every figure. In the Figures:
FIG. 1A is a block diagram illustrating an example system, apparatuses, computer program products, and data structures according to an embodiment;
FIG. 1B is a block diagram illustrating an example system, apparatuses, computer program products, and data structures according to another embodiment;
FIG. 2 is a flowchart depicting an example method according to an embodiment;
FIG. 3 is a flowchart depicting an example method according to an embodiment;
FIG. 4 is a sequence diagram depicting an example method according to an embodiment;
FIG. 5 is a flowchart depicting an example method according to an embodiment;
FIG. 6 is a sequence diagram depicting an example method according to an embodiment; and
FIG. 7 is a screenshot of an example of a user interface according to an embodiment.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms.

In a conventional setup, a user may upgrade the firmware of an NMC whenever s/he wishes. However, some features of and/or upgrades to an NMC may be restricted by license. For example, certain features may be restricted due to security concerns. As another example, certain features or upgrades may be restricted based on payment for such features or upgrades. Thus, firmware updates cannot be made freely available, lest an unlicensed user attempt to apply an impermissible firmware update to an NMC (e.g., by upgrading after a paid support period expires, by installing a feature that was not paid for, or by installing a feature that would pose a security risk).

Thus, it would be desirable to implement a tool to permit access to firmware updates only in accordance with license restrictions. In order to enforce this, a firmware update may be provided in encrypted form within an installer application that is configured to only provide a decrypted version of the firmware update if a license specific to that NMC for that firmware update is available.

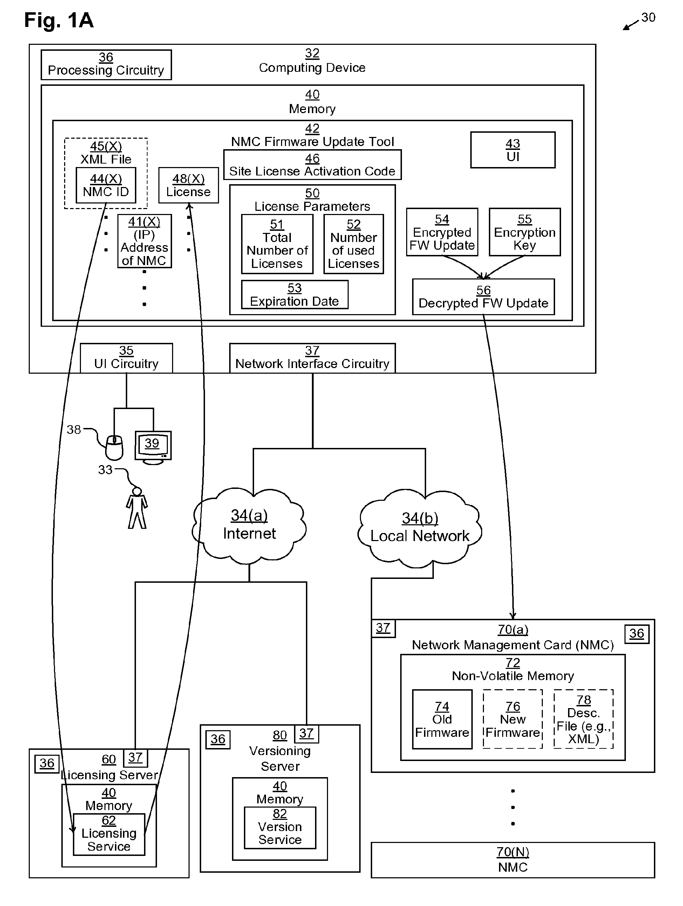

Fig. 1A depicts an example system 30 for use in connection with various embodiments. System 30 includes at least one computing device 32 that is able to connect to a set of N NMCs 70 (depicted as NMCs 70(a), ... , 70(N)) over a local network 34(b). Computing device 32 is also able to connect to a licensing server 60 over a public network, such as the Internet 34(a). Computing device 32 may be any kind of computing device, such as, for example, a personal computer, laptop, workstation, server, enterprise server, tablet, smartphone, router, etc. In an example embodiment, computing device 32 is a personal computer or laptop.

Local network 34(b) may be any kind of communications network or set of communications networks, such as, for example, a LAN, WAN, SAN, a wireless communication network, a virtual network, a fabric of interconnected switches, etc. Local network 34(a) is not accessible to the general public.

Computing device 32 includes processing circuitry 36, network interface circuitry 37, user interface (UI) circuitry 35, and memory 40. Computing device 32 may also include various additional features as is well-known in the art, such as, for example, interconnection traces and buses, etc.

Processing circuitry 36 may include any kind of processor or set of processors configured to perform operations, such as, for example, a microprocessor, a multi-core microprocessor, a digital signal processor, a field-programmable gate array (FPGA), a system on a chip (SoC), a collection of electronic circuits, a similar kind of controller, or any combination of the above.

Network interface circuitry 37 may include one or more Ethernet cards, cellular modems, Fibre Channel (FC) adapters, InfiniBand adapters, wireless networking adapters (e.g., Wi-Fi), and/or other devices for connecting to a networks 34(a), 34(b).

UI circuitry 35 may include any circuitry needed to communicate with and connect to one or more user input devices 38 and display screens 39. UI circuitry 35 may include, for example, a keyboard controller, a mouse controller, a touch controller, a serial bus port and controller, a universal serial bus (USB) port and controller, a wireless controller and antenna (e.g., Bluetooth), a graphics adapter and port, etc.

Display screen 39 may be any kind of display, including, for example, a CRT, LCD screen, LED screen, etc. Input device 38 may include a keyboard, keypad, mouse, trackpad, trackball, pointing stick, joystick, touchscreen (e.g., embedded within display screen 39), microphone/voice controller, etc. In some embodiments, instead of being external to computing device 32, the input device 38 and/or display screen 39 may be embedded within the computing device 32 (e.g., a cell phone or tablet with an embedded touchscreen).

Memory 40 may include any kind of digital system memory, such as, for example, random access memory (RAM). Memory 40 stores an operating system (OS, not depicted, e.g., a Linux, UNIX, Windows, MacOS, or similar operating system) and various drivers and other applications and software modules configured to execute on processing circuitry 36 as well as various data. In some embodiments, at least a portion (not depicted) of memory 40 may be secure memory, such as a hardened memory chip.

Memory 40 of computing device 32 stores an NMC firmware update tool (NFUT) 42 configured to operate on processing circuitry 36. NFUT 42 operates to conduct a firmware update on one or more of NMCs 70 in accordance with license parameters 50. For example, license parameters 50 may include a total number 51 of licenses 48 available to an organization for receiving the firmware update as well as an expiration date 53 after which the firmware update is no longer available to the organization. License parameters 50 may also include a number 52 of used licenses 48. For example, if total number 51 is 100, and 23 NMC-specific licenses 48 have already been issued, then the number 52 of used licenses 48 is 23, leaving 77 remaining licenses 48 available to be issued to additional NMCs 70.

Memory 40 of computing device 32 also stores a UI 43 configured to display on display screen 39 and to interact with a user 33 via user input device(s) 38.

Memory 40 may also store various other data structures used by the OS, NFUT 42, UI 43, and/or various other applications and drivers. In some embodiments, memory 40 may also include a persistent storage portion. Persistent storage portion of memory 40 may be made up of one or more persistent storage devices, such as, for example, magnetic disks, flash drives, solid-state storage drives, or other types of storage drives. Persistent storage portion of memory 40 is configured to store programs and data even while the computing device 32 is powered off. The OS, NFUT 42, UI 43, and/or various other applications and drivers are typically stored in this persistent storage portion of memory 40 so that they may be loaded into a system portion of memory 40 upon a system restart or as needed. The OS, NFUT 42, UI 43, and/or various other applications and drivers, when stored in non-transitory form either in the volatile or persistent portion of memory 40, each form a computer program product. The processing circuitry 36 running one or more applications thus forms a specialized circuit constructed and arranged to carry out the various processes described herein.

Each NMC 70 includes processing circuitry 36, network interface circuitry 37, and nonvolatile memory (NVM) 72 (e.g., flash memory). NVM 72 initially stores old firmware 74, which is configured to operate on processing circuitry 36 of the NMC 70 to execute functionality of the NMC 70. After a firmware update process, NVM 72 stores new firmware 76 in place of the old firmware 74. NVM 72 also stores a description file 78 (e.g., in XML format) storing various information about the configuration of the NMC 70. For example, description file 78 may include an NMC identifier (ID) 44 (e.g., the MAC address of the NMC 70) as well as a version number of the firmware 74, 76 currently installed on the NMC 70. In some embodiments, there may be a separate version number for different parts of the firmware 74, 76 (e.g., a bootloader, an operating system, and one or more applications).

Licensing server 60 may be any kind of computing device, such as, for example, a personal computer, laptop, workstation, server, enterprise server, tablet, smartphone, router, etc. In an example embodiment, licensing server 60 is a server. Licensing server 60 includes processing circuitry 36, network interface circuitry 37, and memory 40. Licensing server 60 may also include various additional features as is well-known in the art, such as, for example, user interface circuitry, interconnection traces and buses, etc. Memory 40 of licensing server 60 stores a licensing service 62 that operates on processing circuitry 36 of licensing server 60 to enforce the license parameters 50 in order provide licenses 48 to NFUT 42.1n operation user 33 operates input device 38 to manipulate the UI 43 to add an NMC 70(X) to the awareness of NFUT 42. In some embodiments, this is done by the user 33 entering an IP address 41(X) of the NMC 70(X), after which NFUT 42 requests an XML description file 45(X) from the NMC 70(X), the XML description file 45(X) at least including the NMC ID 44(X) (e.g., the MAC address) of the NMC 70(X). Upon receipt of the XML description file 45(X), NFUT 42 sends a request to the licensing service 62 via Internet 35, the request including the NMC ID 44(X) as well as a site license activation code 46 indicating permission for the organization to obtain licenses 48. In response, the licensing service 62 verifies that the total number 51 of licenses 48 exceeds the number 52 of used licenses 48 and that the expiration date 53 has not yet passed; if so, licensing service 62 generates a license 48(X) that is uniquely associated (e.g., using a cryptographic hash or signature) with the NMC ID 44(X) and sends that license 48(X) back to the NFUT 42. NFUT 42 then updates UI 43 to list the NMC 70(X) as being licensed and ready to receive the firmware update. In some embodiments, prior to NFUT 42 sending the request to the licensing service 62, NFUT 42 independently verifies that the total number 51 of licenses 48 exceeds the number 52 of used licenses 48 and that the expiration date 53 has not yet passed.

In continued operation user 33 operates input device 38 to manipulate the UI 43 to initiate the firmware update for the NMC 70(X). NFUT 42 verifies that the license 48(X) is present and is correctly associated with the NMC 70(X) and that the expiration date 53 has not yet passed. Once this is verified, NFUT 42 uses a built-in encryption key 55 to decrypt an encrypted firmware update 54, yielding a decrypted firmware update 56. In some embodiments, both the built-in encryption key 55 and the decrypted firmware update 56 are stored within secure memory. Once decrypted, NFUT 42 sends the decrypted firmware update 56 to the NMC 70(X) for installation as the new firmware 76.

In some embodiments, system 30 may also include a versioning server 80 configured to assist with management of the version of the new firmware 76. Versioning server 80 may be any kind of computing device, such as, for example, a personal computer, laptop, workstation, server, enterprise server, tablet, smartphone, router, etc. In an example embodiment, versioning server 80 is a server. Versioning server 80 includes processing circuitry 36, network interface circuitry 37, and memory 40. Versioning server 80 may also include various additional features as is well-known in the art, such as, for example, user interface circuitry, interconnection traces and buses, etc. Memory 40 of versioning server 80 stores a versioning service 82 that operates on processing circuitry 36 of versioning server 80 to communicate versioning information with NFUT 42.

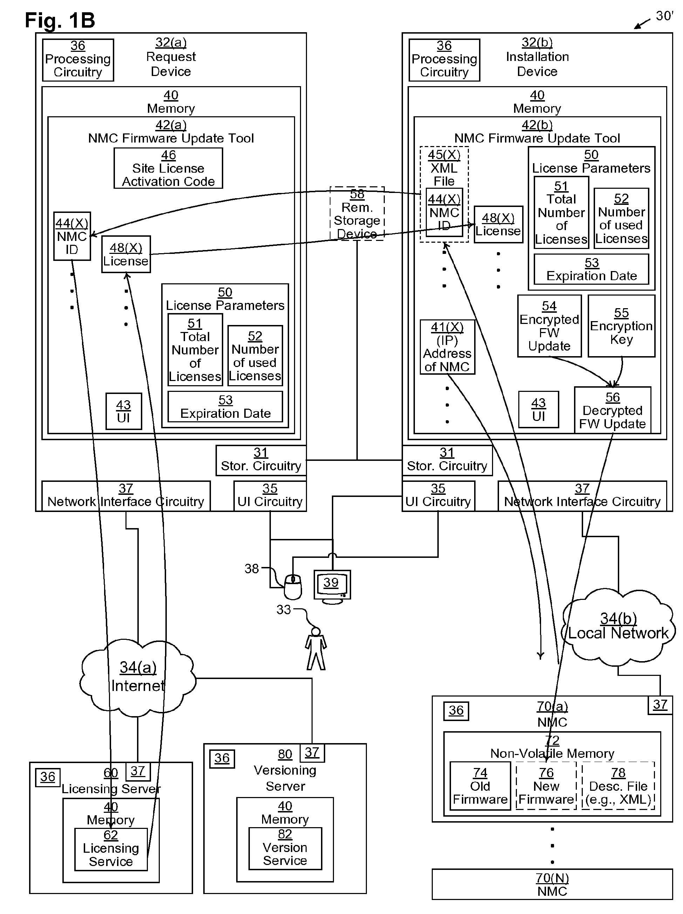

Fig. 1B depicts another example system 30' for use in connection with various alternate embodiments associated with an extreme air gap. System 30' includes a request device 32(a) that is able to connect to licensing server 60 over a public network, such as the Internet 34(a). System 30' also includes a separate installation device 32(b) that is able to connect to the set of NMCs 70 over a local network 34.

Request device 32(a) and installation device 32(b) may each be any kind of computing device, such as, for example, a personal computer, laptop, workstation, server, enterprise server, tablet, smartphone, router, etc. In an example embodiment, request device 32(a) and installation device 32(b) are each a personal computer or laptop.

Request device 32(a) and installation device 32(b) are similar to the computing device 32 of system 30. In some embodiments, request device 32(a) and installation device 32(b) may each contain storage circuitry 31 to allow connection to a removable storage device 58. Storage circuitry 31 may include, for example, a Universal Serial Bus (USB) port, and removable storage device 58 may be, for example, a flash drive.

Memory 40 of request device 32(a) and installation device 32(b) are similar to the memory 40 of computing device 32 of system 30, but there are differences with respect to what is stored therein.

Memory 40 of request device 32(a) stores an operating system (OS, not depicted, e.g., a Linux, UNIX, Windows, MacOS, or similar operating system) and various drivers and other applications and software modules configured to execute on processing circuitry 36 as well as various data. Memory 40 of request device 32(a) stores a request portion of NFUT 42(a). NFUT 32(a) includes UI 43, the site license activation code 46, and license parameters 50.

Memory 40 of installation device 32(b) stores an operating system (OS, not depicted, e.g., a Linux, UNIX, Windows, MacOS, or similar operating system) and various drivers and other applications and software modules configured to execute on processing circuitry 36 as well as various data. In some embodiments, at least a portion (not depicted) of the memory 40 of installation device 32(b) may be secure memory, such as a hardened memory chip. Memory 40 of installation device 32(b) stores an installation portion of NFUT 42(b). NFUT 32(b) includes UI 43, license parameters 50, and the built-in encryption key 55.

NFUTs 42(a), 42(b) operate in tandem to conduct a firmware update on one or more of NMCs 70 in accordance with license parameters 50. For example, as described previously, license parameters 50 may include a total number 51 of licenses 48 available to an organization for receiving the firmware update as well as an expiration date 53 after which the firmware update is no longer available to the organization. License parameters 50 may also include a number 52 of used licenses 48. For example, if total number 51 is 100, and 23 NMC-specific licenses 48 have already been issued, then the number 52 of used licenses 48 is 23, leaving 77 remaining licenses 48 available to be issued to additional NMCs 70.

In operation user 33 operates input device 38 connected to installation device 32(b) to manipulate the UI 43 of NFUT 42(b) to add an NMC 70(X) to the awareness of NFUT 42(b). In some embodiments, this is done by the user 33 entering an IP address 41(X) of the NMC 70(X), after which NFUT 42(b) requests an XML description file 45(X) from the NMC 70(X), the XML description file 45(X) at least including the NMC ID 44(X) (e.g., the MAC address) of the NMC 70(X).

Upon receipt of the XML description file 45(X), user 33 inputs the NMC ID 44(X) into the request device 32(a). In some embodiments, this may be done by the user 33 connecting a removable storage device 58 to the storage circuitry 31 of installation device 32(b) and NFUT 42(b) storing the NMC ID 44(X) on the removable storage device 58, after which the user 33 disconnects the removable storage device 58 and connects it to the storage circuitry 31 of request device 32(a), allowing NFUT 42(a) to obtain the NMC ID 44(X) to store in memory 40 of request device 32(a). It should be understood that removable storage device 58 may only be connected to one of the request device 32(a) and installation device 32(b) at a time. In other embodiments, instead of using removable storage device 58, NFUT 42(b) causes UI 43 to display the NMC ID 44(X) on the display screen 39 of installation device 32(b) so that the user 33 can read it and enter the NMC ID 44(X) into UI 43 of NFUT 42(a) of request device 32(a) via a user input device 38 of the request device 32(a). It should be understood that in all embodiments of system 30', the request device 32(a) and installation device 32(b) never connect or communicate directly with each other.

Then, NFUT 42(a) sends a request to the licensing service 62 via Internet 34(a), the request including the NMC ID 44(X) as well as site license activation code 46 indicating permission for the organization to obtain licenses 48. In response, the licensing service 62 verifies that the total number 51 of licenses 48 exceeds the number 52 of used licenses 48 and that the expiration date 53 has not yet passed; if so, licensing service 62 generates a license 48(X) that is uniquely associated (e.g., using a cryptographic hash or signature) with the NMC ID 44(X) and sends that license 48(X) back to the NFUT 42(a). In some embodiments, NFUT 42(a) then updates UI 43 to list the NMC 70(X) as being licensed and ready to receive the firmware update. In some embodiments, prior to NFUT 42(a) sending the request to the licensing service 62, NFUT 42 independently verifies that the total number 51 of licenses 48 exceeds the number 52 of used licenses 48 and that the expiration date 53 has not yet passed.

Upon receipt of the license 48(X), user 33 inputs the license 48(X) into the installation device 32(b). In some embodiments, this may be done by the user 33 connecting removable storage device 58 to the storage circuitry 31 of request device 32(a) and NFUT 42(a) storing the license 48(X) on the removable storage device 58, after which the user 33 disconnects the removable storage device 58 and connects it to the storage circuitry 31 of installation device 32(b), allowing NFUT 42(b) to obtain the license 48(X) to store in memory 40 of installation device 32(b). In other embodiments, instead of using removable storage device 58, NFUT 42(a) causes UI 43 to display the license 48(X) on the display screen 39 of request device 32(a) so that the user 33 can read it and enter the license 48(X) into UI 43 of NFUT 42(b) of installation device 32(b) via a user input device 38 of the installation device 32(b).

In continued operation user 33 operates input device 38 of installation device 32(b) to manipulate the UI 43 of NFUT 42(b) to initiate the firmware update for the NMC 70(X). NFUT 42(b) verifies that the license 48(X) is present and is correctly associated with the NMC 70(X) and that the expiration date 53 has not yet passed. Once this is verified, NFUT 42(b) uses built-in encryption key 55 to decrypt an encrypted firmware update 54, yielding a decrypted firmware update 56. In some embodiments, both the built-in encryption key 55 and the decrypted firmware update 56 are stored within secure memory. Once decrypted, NFUT 42(b) sends the decrypted firmware update 56 to the NMC 70(X) for installation as the new firmware 76.

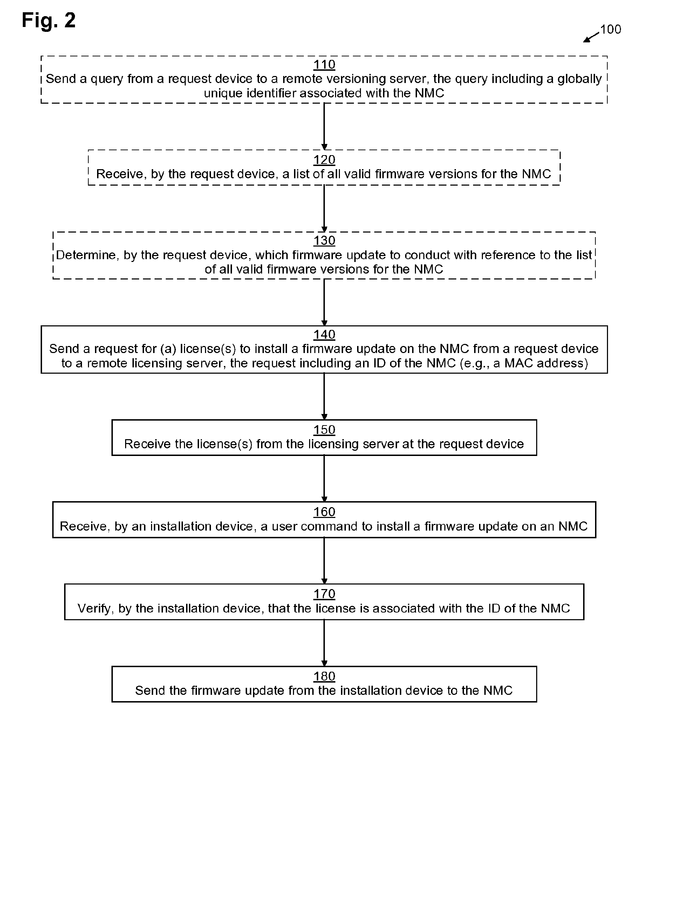

Fig. 2 illustrates an example method 100 performed by computing device 32 of system 30 or devices 32(a), 32(b) of system 30' for conducting a firmware update on one or more of NMCs 70 in accordance with license parameters 50. It should be understood that any time a piece of software (e.g., OS, NFUT 42, NFUT 32(a), NFUT 32(b), UI 43, licensing service 62, versioning service 82, etc.) is described as performing a method, process, step, or function, what is meant is that a computing device (e.g., computing device 32, request device 32(a), installation device 32(b), licensing server 60, versioning server 80 etc.) on which that piece of software is running performs that method, process, step, or function when executing that piece of software on its processing circuitry 36. It should be understood that one or more of the steps or sub-steps of method 100 (especially steps indicated by dashed lines) may be omitted in some embodiments. Similarly, in some embodiments, one or more steps or sub-steps may be combined together or performed in a different order. It should be understood that although method 100 is described in the context of system 30' having separate request device 32(a) and installation device 32(b), method 100 may also be performed in the context of system 30; in that case, all steps described as being performed be either of request device 32(a) or installation device 32(b) is performed by computing device 32. It should also be understood that method 100 may either be performed for a single NMC 70(X) or for several NMCs 70 at once.

In some embodiments, in step 110, request device 32(a) sends a query from request device 32(a) to a versioning service 82 operating on a remote versioning server 80, the query including a globally-unique identifier (GUID) (e.g., NMC ID 44(X)) associated with the NMC 70(X) at issue. In response, in step 120, request device 32(a) receives a list of all valid firmware versions for that NMC 70(X) from the versioning service 82. Then, in step 130, request device 32(a) determines, with reference to the received list, which firmware update to conduct for NMC 70(X) (e.g., identifying and/or providing encrypted firmware update 54 to installation device 32(b)).

In step 140, request device 32(a) sends a request to a licensing service 62 operating on a remote licensing server 60 for a license 48(X) for the NMC 70(X) to allow it to install a firmware update (e.g., the update identified in optional step 130). The request includes the NMC ID 44(X) (e.g., a MAC address of the NMC 70(X)). The request may be sent via a network interface circuitry 37 of the request device 32(a).

In response, in step 150, request device 32(a) receives the license 48(X) from the licensing service 62. At this point, in some embodiments, license 48(X) is transmitted to the installation device 32(b). The request may be received via the network interface circuitry 37 of the request device 32(a).

In step 160, installation device 32(b) receives a command from a user 33 to install the firmware update on the NMC 70(X). In response, in step 170, installation device 32(b) verifies that the license 48(X) is associated with the NMC ID 44(X), and, in some embodiments, that the license 48(X) is not expired. Finally, in step 180, installation device 32(b) sends the firmware update 54 (e.g., after first decrypting encrypted firmware update 54 using key 55) to the NMC 70(X0 so that the NMC 70(X) can replace old firmware 74 with new firmware 76 based on the firmware update 54. The firmware update 54 may be sent via a network interface circuitry 37 of the installation device 32(b).

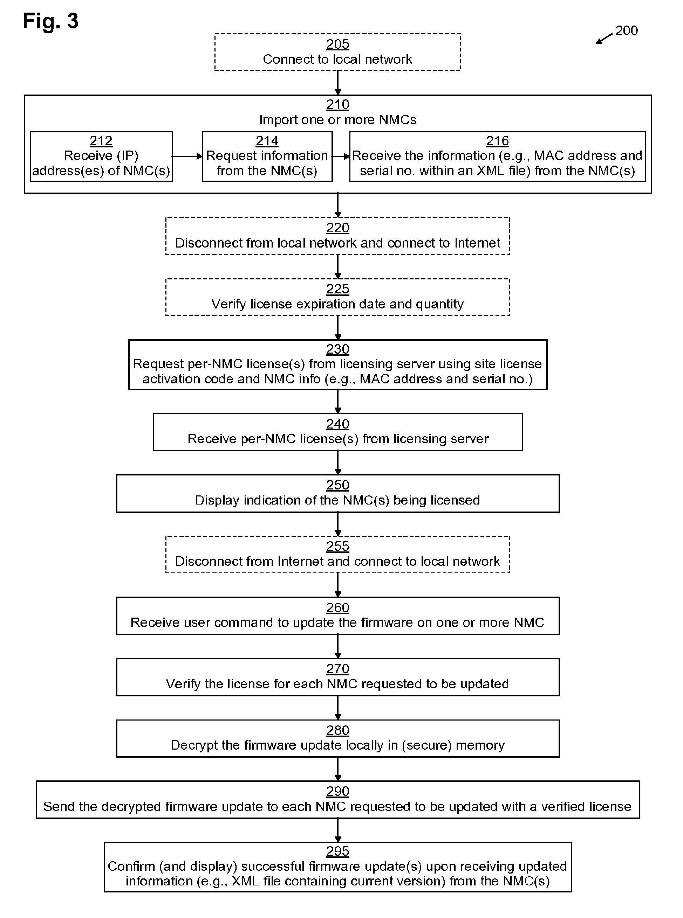

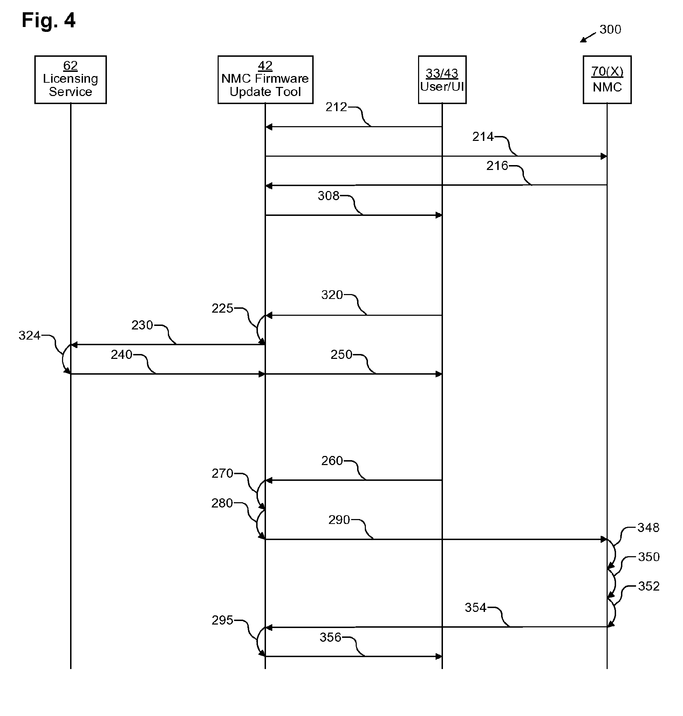

Figs. 3 and 4 illustrate example methods 200, 300, respectively, performed by system 30 for conducting a firmware update on one or more of NMCs 70 in accordance with license parameters 50. Method 200 is described from the perspective of computing device 32, and it may be included within method 300, method 300 also including steps performed outside of the computing device 32. Methods 200 and 300 will be described together.

In some embodiments, methods 200, 300 may be performed in an air-gapped environment in which no device that is connected to local network 34(b) is permitted to also connect simultaneously to another network (e.g., a public network, Internet 34(a)). In such embodiments, in step 205, computing device 32 connects to local network 34(b).

In step 210, one or more NMCs 70 are imported into NFUT 42. In some embodiments, step 210 may include sub-steps 212, 214, 216. In sub-step 212, NFUT 42 receives an address (e.g., an IP address 41) of each of the one or more NMCs 70 from the user 33 via UI 43 and input device 38. Then, in sub-step 214, NFUT 42 sends a request for information to each of the one or more NMCs 70, for example via the non-public local network 34(b) using their respective addresses 41. Then, in sub-step 216, NFUT 42 receives the requested information (e.g., within description file 78) from each of the one or more NMCs 70, for example via the non-public local network 34(b).

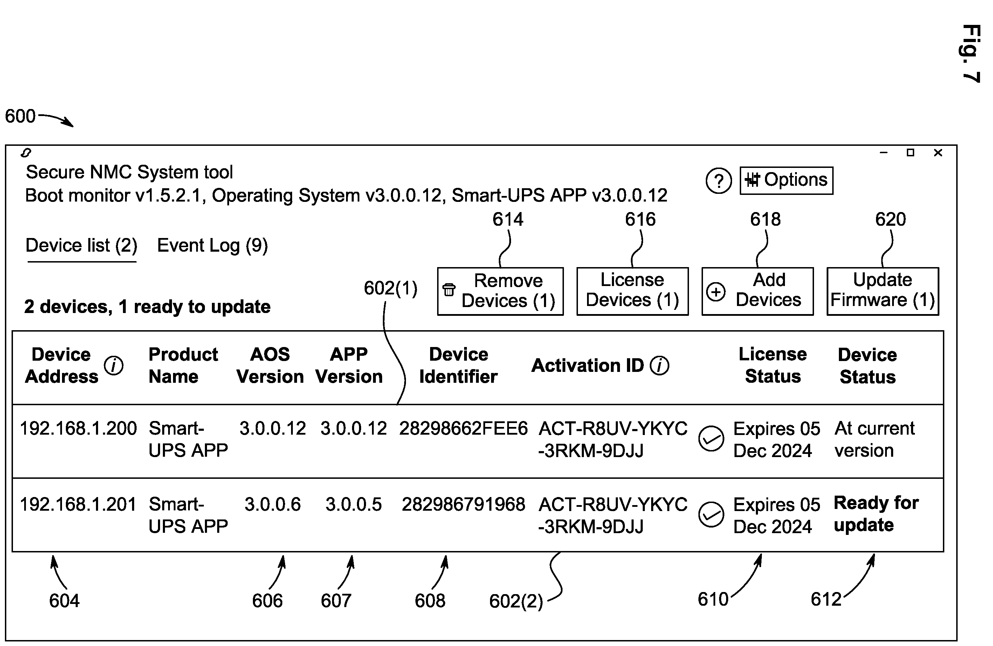

In step 308 (not explicitly depicted in method 200), NFUT 42 displays various information about all of the imported NMCs 70 to the user 33. Fig. 7 depicts an example screen 600 displayed on display device 39 as part of UI 43. Each row 602 (depicted as rows 602(1), 602(2)) depicts information 604, 606, 607, 608, 610, 612 about a different NMC 70 that has been imported. In some embodiments, step 210 is initiated by the user 33 pressing button 618 requesting to add an NMC 70. This brings up a dialog window (not depicted), allowing the user 33 to enter the IP address 604 of an NMC 70 as part of sub-step 112. In some embodiments the user 33 also enters a communications protocol (e.g., FTP, SCP, etc.) and a username and password that may be required to access the NMC 70. Also displayed within screen 600 are a current OS version 606 and a current application version 607 running on each imported NMC 70, as well as the device identifier 608, NMC ID 44 (e.g., the MAC address) of each imported NMC 70.

In some embodiments, in step 220 (not explicitly depicted in method 300), computing device 32 disconnects from local network 34(b) and then connects to Internet 34(a) or a public network via which the licensing server 60 is reachable.

In step 320 (not explicitly depicted in method 200), user 33 selects one or more of the imported NMCs 70 for licensing. For example, user 33 selects one or more rows 602 to indicate respective NMCs 70 and presses the license devices button 616 to begin the license acquisition process. Then, in some embodiments, in step 225, NFUT 42 verifies that the total number 51 of licenses 48 exceeds or equals the number 52 of used licenses 48 plus the requested number of new licenses 48 and that the expiration date 53 has not yet passed.

Then, in step 230, NFUT 42 sends a request to the licensing service 62 via Internet 34(a), the request including the NMC ID 44 for each selected NMC 70 as well as the site license activation code 46 indicating permission for the organization to obtain licenses 48. In response, in step 324, the licensing service 62 verifies that the total number 51 of licenses 48 exceeds or equals the number 52 of used licenses 48 plus the requested number of new licenses 48 and that the expiration date 53 has not yet passed; if so, licensing service 62 generates a respective license 48 that is uniquely associated (e.g., using a cryptographic hash or signature) with each of the NMC IDs 44 from the request and, in step 240, sends that/those license(s) 48 back to the NFUT 42.

Then, in step 250, NFUT 42 updates UI 43 to list the NMC(s) 70 as being licensed and ready to receive the firmware update. Thus, on the example screen 600, NFUT 42 updates the license status field 610 for each of the newly-licensed NMCs 70 to indicate their license expiration date and also updates the device status field 612 to indicate that that NMC 70 is ready to receive the firmware update.

In some embodiments, in step 255 (not explicitly depicted in method 300), computing device 32 disconnects from Internet 34(a) or from all public networks and then connects to local network 34(b).

In step 260, NFUT 42 receives a command from user 33 to update the firmware of one or more of the NMCs 70 that were listed as being ready to receive firmware updates (e.g., NMC 70(Y), listed in row 602(2) on screen 600). For example, user 33 selects one or more rows 602 to indicate respective NMCs 70(Y) and presses the update firmware button 620 to initiate the firmware update process. Then, in step 270, NFUT 42 verifies that the license 48(Y) for each NMC 70(Y) requested to have its firmware updated is correctly associated with that NMC 70(Y) (e.g., its cryptographic signature is consistent with its NMC ID 44(Y)) and that the license 48(Y) has not yet expired; if so, in step 280, NFUT 42 uses built-in encryption key 55 to decrypt encrypted firmware update 54, yielding a decrypted firmware update 56 (stored in secure memory). Once decrypted, in step 290, NFUT 42 sends the decrypted firmware update 56 to each NMC 70(Y) for installation as the new firmware 76.

In step 348, each NMC 70(Y) installs the decrypted firmware update 56 as the new firmware 76 in place of the old firmware 74. Then, in step 350, each NMC 70(Y) reboots, and, in step 352, each NMC 70(Y) updates its description file 78 to indicate the new version number(s). Then, in step 354, each NMC 70(Y) sends the newly updated description file 78 to NFUT 42. In response, in step 295, NFUT 42 confirms that each NMC 70(Y) for which an updated description file 78 listing the correct version(s) 606, 607 for the firmware update was received has successfully updated its firmware in accordance with the user instructions. In step 356, NFUT 42 updates UI 43 to list the confirmed NMC(s) 70(Y) as being fully updated. Thus, on the example screen 600, NFUT 42 updates the device status field 612 for each of the newly-updated NMCs 70(Y) to indicate that they are all at the current firmware version.

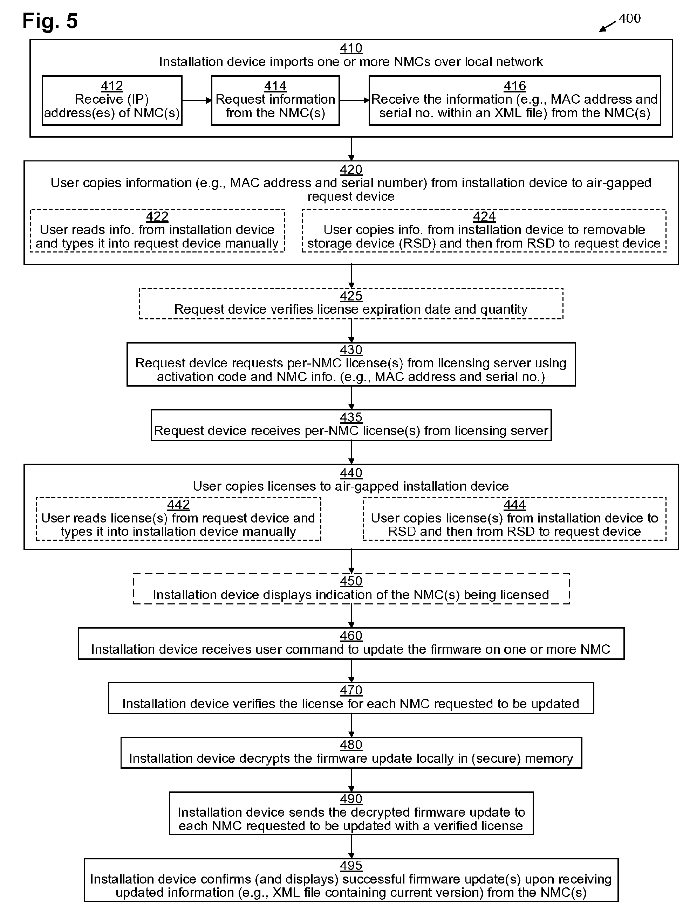

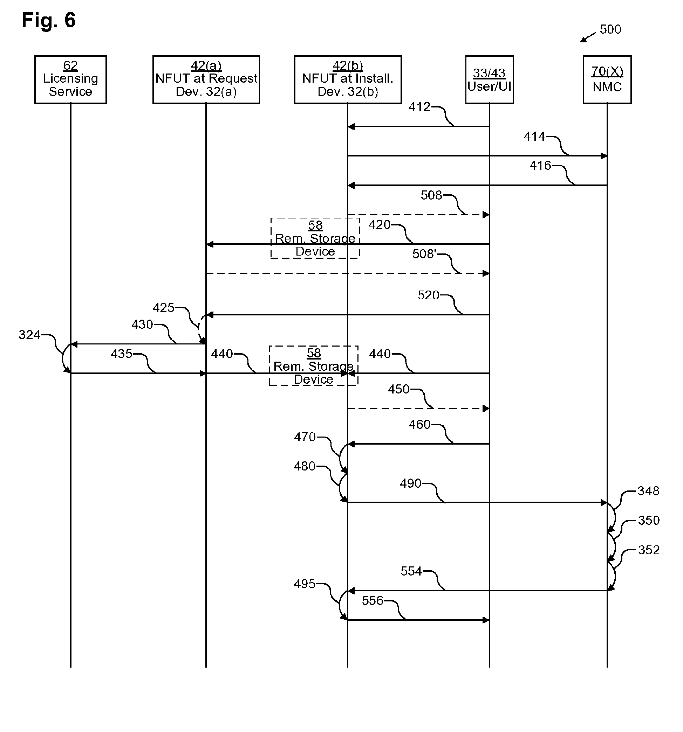

Figs. 5 and 6 illustrate example methods 400, 500, respectively, performed by system 30' for conducting a firmware update on one or more of NMCs 70 in accordance with license parameters 50. Method 400 is described from the perspective of request device 32(a) and installation device 32(b), and it may be included within method 500, method 500 also including steps performed outside of the request device 32(a) and installation device 32(b). Methods 400 and 500 will be described together.

Methods 400, 500 are performed in an extreme air-gapped environment in which no device that is able to connect to local network 34(b) is permitted to also connect to any device that is able to connect to another network (e.g., Internet 34(a)).

In step 410, one or more NMCs 70 are imported into NFUT 42(b) running on installation device 32(b). In some embodiments, step 410 may include sub-steps 412, 414, 416. In sub-step 412, NFUT 42(b) receives an address (e.g., an IP address 41) of each of the one or more NMCs 70 from the user 33 via UI 43 and input device 38 of installation device 32(b). Then, in sub-step 414, NFUT 42(b) sends a request for information to each of the one or more NMCs 70 using their respective addresses 41. Then, in sub-step 416, NFUT 42(b) receives the requested information (e.g., within description file 78) from each of the one or more NMCs 70.

In some embodiments, in step 508 (not explicitly depicted in method 400), NFUT 42(b) displays various information about all of the imported NMCs 70 to the user 33. Fig. 7 depicts an example screen 600 displayed on display device 39 as part of UI 43. Each row 602 (depicted as rows 602(1), 602(2)) depicts information 604, 606, 607, 608, 610, 612 about a different NMC 70 that has been imported. In some embodiments, step 410 is initiated by the user 33 pressing button 618 requesting to add an NMC 70. This brings up a dialog window (not depicted), allowing the user 33 to enter the IP address 604 of an NMC 70 as part of sub-step 412. In some embodiments the user 33 also enters a communications protocol (e.g., FTP, SCP, etc.) and a username and password that may be required to access the NMC 70. Also displayed within screen 600 are a current OS version 606 and a current application version 607 running on each imported NMC 70, as well as the device identifier 608, NMC ID 44 (e.g., the MAC address) of each imported NMC 70.

In step 420, the user 33 causes identifying information such as NMC ID 44 (e.g., the MAC address) of the imported NMCs 70 to be indirectly copied from the installation device 32(b) to the air-gapped request device 32(a). In some embodiments, a serial number of the imported NMCs 70 is also copied. In some embodiments, step 420 may be implemented as sub-step 422, while in other embodiments, step 420 may be implemented as sub-step 424.

In sub-step 422, NFUT 42(b) causes UI 43 to display the NMC IDs 44 (and any other identifying information) of the imported NMCs 70 on the display screen 39 of installation device 32(b) so that the user 33 can read it and enter the NMC IDs 44 (and any other identifying information) into UI 43 of NFUT 42(a) of request device 32(a) via a user input device 38 of the request device 32(a).

Alternatively, in sub-step 422, the user 33 connects removable storage device 58 to the storage circuitry 31 of installation device 32(b) and NFUT 42(b) stores the NMC IDs 44 (and any other identifying information) of the imported NMCs 70 on the removable storage device 58, after which the user 33 disconnects the removable storage device 58 and connects it to the storage circuitry 31 of request device 32(a), allowing NFUT 42(a) to obtain the NMC IDs 44 (and any other identifying information) of the imported NMCs 70 to store in memory 40 of request device 32(a).

In some embodiments, in step 508' (not explicitly depicted in method 400), NFUT 42(a) displays various information about all of the imported NMCs 70 to the user 33 in a similar manner as described in connection with step 508.

In step 520 (not explicitly depicted in method 200), user 33 selects one or more of the imported NMCs 70 for licensing. For example, user 33 selects one or more rows 602 to indicate respective NMCs 70 and presses the license devices button 616 to begin the license acquisition process. Then, in some embodiments, in step 425, NFUT 42(a) verifies that the total number 51 of licenses 48 exceeds or equals the number 52 of used licenses 48 plus the requested number of new licenses 48 and that the expiration date 53 has not yet passed.

Then, in step 430, NFUT 42(a) sends a request to the licensing service 62 via Internet 34(a), the request including the NMC ID 44 (and any other identifying information) for each selected NMC 70 as well as the site license activation code 46 indicating permission for the organization to obtain licenses 48. In response, in step 324, the licensing service 62 verifies that the total number 51 of licenses 48 exceeds or equals the number 52 of used licenses 48 plus the requested number of new licenses 48 and that the expiration date 53 has not yet passed; if so, licensing service 62 generates a respective license 48 that is uniquely associated (e.g., using a cryptographic hash or signature) with each of the NMC IDs 44 from the request and, in step 435, sends that/those license(s) 48 back to the NFUT 42(a).

In step 440, the user 33 causes that/those license(s) 48 for each selected NMC 70 to be indirectly copied from the request device 32(a) to the air-gapped installation device 32(b). In some embodiments, step 440 may also include the user 33 entering an import command directing NFUT 42(b) to import that/those license(s) 48 once copied. In some embodiments, step 440 may be implemented as sub-step 442, while in other embodiments, step 440 may be implemented as sub-step 444.

In sub-step 442, NFUT 42(a) causes UI 43 to display that/those license(s) 48 for each selected NMC 70 on the display screen 39 of request device 32(a) so that the user 33 can read it and enter that/those license(s) 48 for each selected NMC 70 into UI 43 of NFUT 42(b) of installation device 32(b) via a user input device 38 of the installation device 32(b).

Alternatively, in sub-step 444, the user 33 connects removable storage device 58 to the storage circuitry 31 of request device 32(a) and NFUT 42(a) stores that/those license(s) 48 for each selected NMC 70 on the removable storage device 58, after which the user 33 disconnects the removable storage device 58 and connects it to the storage circuitry 31 of installation device 32(b), allowing NFUT 42(b) to obtain that/those license(s) 48 for each selected NMC 70 to store in memory 40 of installation device 32(b).

Then, in step 450, NFUT 42(b) updates UI 43 to list the NMC(s) 70 as being licensed and ready to receive the firmware update. Thus, on the example screen 600, NFUT 42(b) updates the license status field 610 for each of the newly-licensed NMCs 70 to indicate their license expiration date and also updates the device status field 612 to indicate that that NMC 70 is ready to receive the firmware update.

In step 460, NFUT 42(b) receives a command from user 33 to update the firmware of one or more of the NMCs 70 that were listed as being ready to receive firmware updates (e.g., NMC 70(Y), listed in row 602(2) on screen 600). For example, user 33 selects one or more rows 602 to indicate respective NMCs 70(Y) and presses the update firmware button 620 to initiate the firmware update process. Then, in step 470, NFUT 42(b) verifies that the license 48(Y) for each NMC 70(Y) requested to have its firmware updated is correctly associated with that NMC 70(Y) (e.g., its cryptographic signature is consistent with its NMC ID 44(Y)) and that the license 48(Y) has not yet expired; if so, in step 480, NFUT 42(b) uses built-in encryption key 55 to decrypt encrypted firmware update 54, yielding a decrypted firmware update 56 (stored in secure memory). Once decrypted, in step 490, NFUT 42(b) sends the decrypted firmware update 56 to each NMC 70(Y) for installation as the new firmware 76.

In step 348, each NMC 70(Y) installs the decrypted firmware update 56 as the new firmware 76 in place of the old firmware 74. Then, in step 350, each NMC 70(Y) reboots, and, in step 352, each NMC 70(Y) updates its description file 78 to indicate the new version number(s). Then, in step 554, each NMC 70(Y) sends the newly updated description file 78 to NFUT 42(b). In response, in step 495, NFUT 42(b) confirms that each NMC 70(Y) for which an updated description file 78 listing the correct version(s) 606, 607 for the firmware update was received has successfully updated its firmware in accordance with the user instructions. In step 556, NFUT 42(b) updates UI 43 to list the confirmed NMC(s) 70(Y) as being fully updated. Thus, on the example screen 600, NFUT 42(b) updates the device status field 612 for each of the newly-updated NMCs 70(Y) to indicate that they are all at the current firmware version.

It should be understood that although various embodiments have been described as being methods, software embodying these methods is also included. Thus, one embodiment includes a tangible computer-readable medium (such as, for example, a hard disk, a floppy disk, an optical disk, computer memory, flash memory, etc.) programmed with instructions, which, when performed by a computer or a set of computers, cause one or more of the methods described in various embodiments to be performed. Another embodiment includes a computer which is programmed to perform one or more of the methods described in various embodiments.

Furthermore, it should be understood that all embodiments which have been described may be combined in all possible combinations with each other, except to the extent that such combinations have been explicitly excluded.

Finally, nothing in this Specification shall be construed as an admission of any sort. Even if a technique, method, apparatus, or other concept is specifically labeled as "background" or as "conventional," Applicant makes no admission that such technique, method, apparatus, or other concept is actually prior art under relevant law, such determination being a legal determination that depends upon many factors, not all of which are known to Applicant at this time.

### ENUMERATED EMBODIMENTS

Further examples are disclosed below:
Clause 1. A computer program product comprising a non-transitory computer-readable storage medium storing instructions, which when performed by processing circuitry of a computing system, cause the computing system to conduct a firmware update on an external network management card (NMC) by:
   sending a request for a license to install the firmware update on the NMC from a request device of the computing system to a remote licensing server, the request including an identifier of the NMC;
   receiving the license by the request device from the licensing server;
   in response to a user request to install the firmware update on the NMC, verifying, by an installation device of the computing system, that the license is associated with the identifier of the NMC; and
   in response to verifying that the license is associated with the identifier of the NMC, sending the firmware update from the installation device to the NMC.
Clause 2. The computer program product of clause 1 wherein the installation device is the request device and the NMC is connected to the installation device via a non-public local network.
Clause 3. The computer program product of clause 2 wherein the instructions, when executed by the processing circuitry, further cause the request device to:
   request the identifier from the NMC via the non-public local network and
   in response, receive the identifier from the NMC via the non-public local network.
Clause 4. The computer program product of clause 1 wherein:
   the installation device connects to the NMC via a non-public local network;
   the installation device does not connect to any public network;
   the request device is separate from the installation device;
   the request device connects to a public network via which the licensing server is reachable; and
   the request device does not connect to the non-public local network.
Clause 5. The computer program product of clause 1 wherein sending the firmware update from the installation device to the NMC includes:
   decrypting an encrypted version of the firmware update to yield a decrypted version of the firmware update and
   sending the decrypted version of the firmware update to the NMC.
Clause 6. The computer program product of clause 1 wherein the instructions, when executed by the processing circuitry, further cause:
   the request device to send a query to a remote versioning server, the query including a globally unique identifier associated with the NMC;
   the request device to receive, in response to the query, a list of all valid firmware versions for the NMC; and
   the request device to determine which firmware update to conduct with reference to the list of all valid firmware versions for the NMC.
Clause 7. A method of conducting a firmware update on a network management card (NMC), the method comprising:
   sending a request for a license to install the firmware update on the NMC from a request device to a remote licensing server, the request including an identifier of the NMC;
   receiving the license by the request device from the licensing server;
   in response to a user request to install the firmware update on the NMC, verifying, by an installation device, that the license is associated with the identifier of the NMC; and
   in response to verifying that the license is associated with the identifier of the NMC, sending the firmware update from the installation device to the NMC.
Clause 8. The method of clause 7 wherein the installation device is the request device and the NMC is connected to the installation device via a non-public local network.
Clause 9. The method of clause 8 wherein the method further comprises the request device:
   requesting the identifier from the NMC via the non-public local network and
   in response, receiving the identifier from the NMC via the non-public local network.
Clause 10. The method of clause 9 wherein the method further comprises:
   prior to requesting the identifier, disconnecting the request device from all public networks and connecting the request device to the non-public local network;
   subsequent to receiving the identifier and prior to sending the request, disconnecting the request device from the non-public local network and connecting the request device to a public network via which the licensing server is reachable; and
   subsequent to receiving the license and prior to receiving the user request, disconnecting the request device from all public networks and connecting the request device to the non-public local network.
Clause 11. The method of clause 7 wherein:
   the installation device connects to the NMC via a non-public local network;
   the installation device does not connect to any public network;
   the request device is separate from the installation device;
   the request device connects to a public network via which the licensing server is reachable; and
   the request device does not connect to the non-public local network.
Clause 12. The method of clause 11 wherein the method further comprises:
   the installation device requesting the identifier from the NMC via the non-public local network;
   in response, the installation device receiving the identifier from the NMC via the non-public local network;
   in response, a user copying the identifier from the installation device to the request device; and
   subsequent to the request device receiving the license, the user copying the license from the request device to the installation device.
Clause 13. The method of clause 12 wherein the user copying the identifier and the user copying the license are both performed by manually reading and typing.
Clause 14. The method of clause 12 wherein:
   the user copying the identifier includes the user copying the identifier to a removable storage device and then copying the identifier from the removable storage device to the request device and
   the user copying the license includes the user copying the license to a removable storage device and then copying the license from the removable storage device to the installation device.
Clause 15. The method of clause 7 wherein sending the firmware update from the installation device to the NMC includes:
   decrypting an encrypted version of the firmware update to yield a decrypted version of the firmware update and
   sending the decrypted version of the firmware update to the NMC.
Clause 16. The method of clause 7 wherein the method further comprises:
   sending a query from the request device to a remote versioning server, the query including a globally unique identifier associated with the NMC;
   in response to the query, receiving, by the request device, a list of all valid firmware versions for the NMC; and
   determining, by the request device, which firmware update to conduct with reference to the list of all valid firmware versions for the NMC.
Clause 17. A system comprising:
   a request device having first network interface circuitry configured to connect to a remote licensing server;
   an installation device having second network interface circuitry configured to connect to an external network management card (NMC); and
   processing circuitry coupled to memory configured to conduct a firmware update on the NMC by:
      sending, via the first network interface circuitry, a request for a license to install the firmware update on the NMC to the remote licensing server, the request including an identifier of the NMC;
      receiving, via the first network interface circuitry, the license from the licensing server;
      in response to a user request to install the firmware update on the NMC, verifying, by the installation device, that the license is associated with the identifier of the NMC; and
      in response to verifying that the license is associated with the identifier of the NMC, sending the firmware update to the NMC via the second network interface circuitry.
Clause 18. The system of clause 17 wherein the installation device is the request device and the NMC is connected to the installation device via a non-public local network.
Clause 19. The system of clause 18 wherein the processing circuitry coupled to memory is further configured to cause the request device to:
   request the identifier from the NMC via the non-public local network and
   in response, receive the identifier from the NMC via the non-public local network.
Clause 20. The system of clause 17 wherein:
   the installation device connects to the NMC via a non-public local network;
   the installation device does not connect to any public network;
   the request device is separate from the installation device;
   the request device connects to a public network via which the licensing server is reachable; and
   the request device does not connect to the non-public local network.
Clause 21. The system of clause 17 wherein sending the firmware update from the installation device to the NMC includes:
   decrypting an encrypted version of the firmware update to yield a decrypted version of the firmware update and
   sending the decrypted version of the firmware update to the NMC.
Clause 22. The system of clause 17 wherein the processing circuitry coupled to memory is further configured to cause:
   the request device to send a query to a remote versioning server, the query including a globally unique identifier associated with the NMC;
   the request device to receive, in response to the query, a list of all valid firmware versions for the NMC; and
   the request device to determine which firmware update to conduct with reference to the list of all valid firmware versions for the NMC.

## Claims

1. A computer program product comprising a non-transitory computer-readable storage medium storing instructions, which when performed by processing circuitry (36) of a computing device (32), cause the computing device to conduct a firmware update on an external network management card (NMC) (70) by:
sending (140) a request for a license (48) to install the firmware update on the NMC from the computing device to a remote licensing server, the request including an identifier (44) of the NMC;
receiving (150) the license by the computing device from the licensing server (60);
in response to a user request to install the firmware update on the NMC, verifying (170), by the computing device, that the license is associated with the identifier of the NMC; and
in response to verifying that the license is associated with the identifier of the NMC, sending (180) the firmware update from the computing device to the NMC.

2. The computer program product of claim 1 wherein the NMC is connected to the computing device via a non-public local network (34b).

3. The computer program product of claim 2 wherein the instructions, when executed by the processing circuitry, further cause the computing device to:
request (214) the identifier from the NMC via the non-public local network and
in response, receive (216) the identifier from the NMC via the non-public local network.

4. The computer program product of any of above claims wherein sending the firmware update from the computing device to the NMC includes:
decrypting (280) an encrypted version of the firmware update (54) to yield a decrypted version of the firmware update (56) and
sending (290) the decrypted version of the firmware update to the NMC.

5. The computer program product of any of above claims wherein the instructions, when executed by the processing circuitry, further cause the computing device to:
Send (110) a query to a remote versioning server (80), the query including a globally unique identifier associated with the NMC;
Receive (120), in response to the query, a list of all valid firmware versions for the NMC; and
determine (130) which firmware update to conduct with reference to the list of all valid firmware versions for the NMC.

6. A method of conducting a firmware update on a network management card (NMC), the method comprising:
sending a request for a license to install the firmware update on the NMC from a computing device to a remote licensing server, the request including an identifier of the NMC;
receiving the license by the computing device from the licensing server;
in response to a user request to install the firmware update on the NMC, verifying, by the computing device, that the license is associated with the identifier of the NMC; and
in response to verifying that the license is associated with the identifier of the NMC, sending the firmware update from the computing device to the NMC.

7. The method of claim 6 wherein the NMC is connected to the computing device via a non-public local network.

8. The method of claim 7 wherein the method further comprises the computing device:
requesting the identifier from the NMC via the non-public local network and
in response, receiving the identifier from the NMC via the non-public local network.

9. The method of any of claims 7 or 8 wherein the method further comprises:
prior to requesting the identifier, disconnecting the computing device from all public networks and connecting (205) the computing device to the non-public local network;
subsequent to receiving the identifier and prior to sending the request, disconnecting (220) the computing device from the non-public local network and connecting (220) the computing device to a public network via which the licensing server is reachable; and
subsequent to receiving the license and prior to receiving the user request, disconnecting (255) the computing device from all public networks and connecting (255) the computing device to the non-public local network.

10. The method of any of claims 6 to 9 wherein sending the firmware update from the computing device to the NMC includes:
decrypting an encrypted version of the firmware update to yield a decrypted version of the firmware update and
sending the decrypted version of the firmware update to the NMC.

11. The method of any of claims 6 to 10 wherein the method further comprises:
sending a query from the computing device to a remote versioning server, the query including a globally unique identifier associated with the NMC;
in response to the query, receiving, by the computing device, a list of all valid firmware versions for the NMC; and
determining, by the computing device, which firmware update to conduct with reference to the list of all valid firmware versions for the NMC.

12. An apparatus (30, 30') comprising:
first network interface circuitry (37) configured to connect to a remote licensing server;
second network interface circuitry (37) configured to connect to an external network management card (NMC); and
processing circuitry coupled to memory (40) configured to conduct a firmware update on the NMC by:
sending, via the first network interface circuitry, a request for a license to install the firmware update on the NMC to the remote licensing server, the request including an identifier of the NMC;
receiving, via the first network interface circuitry, the license from the licensing server;
in response to a user request to install the firmware update on the NMC, verifying that the license is associated with the identifier of the NMC; and
in response to verifying that the license is associated with the identifier of the NMC, sending the firmware update to the NMC via the second network interface circuitry.

13. The system of claim 12 wherein the NMC is connected to the second network interface circuitry via a non-public local network.

14. The system of claim 13 wherein the processing circuitry coupled to memory is further configured to cause the apparatus to:
request the identifier from the NMC via the non-public local network and
in response, receive the identifier from the NMC via the non-public local network.
